# EUROPÄISCHE PATENTANMELDUNG

(11) **EP 0 951 192 A1**
(43) Veröffentlichungstag der Anmeldung: **20.10.1999**
(21) Anmeldenummer: 98440077.0
(22) Anmeldetag: 17.04.1998
(51) Int. Cl.: H04Q 7/38

(54) **Drahtloses Telekommunikationssystem mit Nutzdatensendung auf einem Signalisierungskanal**

(71) Anmelder: ALCATEL, 75088 Paris (FR)
(72) Erfinder: Barth, Ulrich, 70825 Münchingen (DE); Sperber, Christoph, 75175 Pforzheim (DE)
(74) Vertreter: Knecht, Ulrich Karl, Dipl.-Ing.

(57) **Zusammenfassung**

Bekannt sind drahtlose Telekommunikationssysteme, bei denen Basisstationen an mobile Teilnehmerendgeräte auf einem Signalisierungskanal Signalisierungsdaten übertragen, etwa sogenannte "paging messages" auf einem Suchrufkanal.

Es wird nun vorgeschlagen, auf dem Signalisierungskanal (PCH) neben den Signalisierungsdaten auch zumindest zeitweise Nutzdaten zum Empfang durch die mobilen Teilnehmerendgeräte (MX, MY) auszusenden. Damit wird erreicht, daß die mobilen Teilnehmerendgeräte auch dann Nutzdaten empfangen können, wenn ihnen noch kein Verkehrskanal (sogenannter "traffic channel") zugeteilt wurde. Dies ist besonders vorteilhaft beim Rufaufbau von einem Endgerät eines rufenden Teilnehmers zu einem Teilnehmerendgerät (MX) des Telekommunikationssystem (CTS). Mittel der Nutzdaten können etwa Suchrufgruppen gebildet werden, die mehrere Teilnehmerendgeräte (MX, MY) umfassen.

## Beschreibung

Die Erfindung betrifft ein drahtloses Telekommunikationssystem mit mindestens einer Basisstation und mit mindestens einem mobilen Teilnehmerendgerät gemäß dem Oberbegriff des Anspruch 1 und eine Basisstation sowie ein Teilnehmerendgerät gemäß dem Oberbegriff eines der nebengeordneten Ansprüche.

Aus dem Buch "The GSM, Global System for Mobile Communications" von M. Mouly und M.B. Pautet, erschienen 1992 in Eigenverlag, Palaiseau, Frankreich wird in dem Kapitel 6.1.2 auf Seiten 317 bis 321 das Aussenden von Suchrufsignalen in einem drahtlosen Telekommunikationssystem beschrieben. Das dort beschriebene Telekommunikationssystem ist das GSM Mobilfunksystem, das Basisstationen enthält, die auf einem Signalisierungskanal, auf dem sogenannten "paging channel", Funksignale an mobile Teilnehmerendgeräte sendet, an die sogenannten "mobile stations". Die dort auf dem Signalisierungskanal gesendeten Funksignale enthalten "paging messages" und "initial assignment messages". Das bedeutet, daß auf dem Signalisierungskanal Nachrichten für die Durchführung der Suchrufprozedur und der Initialisierungsprozedur übertragen werden. Diese Nachrichten sind also Signalisierungsdaten. Für die Übertragung von Nutzdaten werden in dem dort beschriebenen Telekommunikationssystem Verkehrskanäle bereit gestellt, sogenannte "traffic channels".

Der Erfindung liegt die Erkenntnis zugrunde, daß auch auf einem Signalisierungskanal zumindest zeitweise Nutzdaten übertragen werden können, damit diese die mobilen Teilnehmerendgeräte auch dann empfangen können, wenn ihnen noch kein Verkehrskanal zugeteilt wurde.

Das erfindungsgemäße drahtlose Telekommunikationssystem hat wenigstens eine Basisstation, die auf die Signalisierungskanal zumindest zeitweise Nutzdaten zum Empfang durch das mindestens eine mobile Teilnehmerendgerät aussendet. Demnach kann bereits bei einem Rufaufbau das mobile Teilnehmer-Endgerät Nutzdaten empfangen, obwohl noch kein Nutzdatenkanal zugeteilt wurde.

Die Nutzdaten sind vorzugsweise Text-, Bild- oder Sprachdaten, die Angaben über die gewünschte Rufverbindung, insbesondere die Teilnehmernummer des rufenden Teilnehmers oder den von ihm gewünschten Telekommunikationsdienst, angeben. Es wird auch eine Basisstation und ein mobiles Teilnehmerendgerät für ein solches drahtloses Telekommunikationssystem vorgeschlagen.

Besonders vorteilhaft ist es, wenn anhand der Nutzdaten mehrere Teilnehmerendgeräte zu einer Suchrufgruppe zusammengefaßt werden, die ein gemeinsames Suchrufsignal empfängt. Dies geschieht dadurch, daß die Nutzdaten eine Kennung dieser Teilnehmerendgeräte enthalten und daß die Basisstation ein entsprechendes Suchrufsignal an diese Teilnehmerendgeräte aussendet, wodurch diese eine Suchrufgruppe bilden.

Besonders vorteilhafte Ausführungsformen der Erfindung ergeben sich aus den Unteransprüchen.

Im folgenden wird die Erfindung anhand eines Ausführungsbeispieles und unter Zuhilfenahme der folgenden Figuren näher beschrieben:
- Figur 1,: die schematisch den Aufbau eines drahtloses Telekommunikationsnetzes zeigt;
- Figur 2,: die die Funkübertragung auf dem Signalisierungskanal als schematische Darstellung wiedergibt; und
- Figur 3,: die die Struktur und Inhalte der auf dem Signalisierungskanal übertragenen Daten wiedergibt.

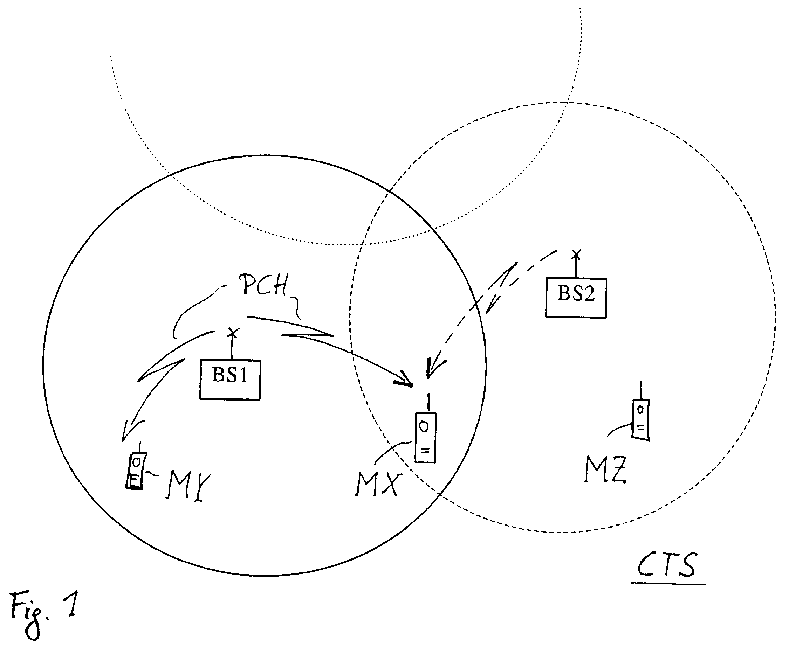

Die Figur 1 ist eine schematische Darstellung eines drahtlosen Telekommunikationssystems CTS mit mehreren Basisstationen, von denen exemplarisch zwei Basisstationen BS1 und BS2 dargestellt sind. Das drahtlose Telekommunikationssystem enthält außerdem mehrere mobile Teilnehmerendgeräte, von denen exemplarisch drei Teilnehmerendgeräte MX, MY und MZ dargestellt sind. Jede Basisstation versorgt eine Funkzelle, d.h. das Telekommunikationssystem ist ein zellulares Funksystem. Die sich in den Funkzellen aufhaltenden Teilnehmerendgeräte empfangen auf einem Signalisierungskanal PCH Funksignale von den Basisstationen. Die die Teilnehmerendgeräte MX und MY sind in der von der Basistation BS1 versorgten Funkzelle registriert und empfangen demnach Funksignale von dieser Basisstation BS1. Registriert sich bespielsweise das Teilnehmerendgerät später in der von der anderen Basisstation BS2 versorgten Funkzelle, so wird es Funksignale von dieser Basisstation BS2 empfangen. Der hier in Figur 1 symbolisch dargestellte Signalisierungskanal ist ein Rundspruchsignalisierungskanal PCH, auf dem die Basisstationen Rundspruchsignale für den Rufaufbau an die mobilen Teilnehmerendgeräte senden. Ein Rundspruchsignal wird immer dann ausgesendet, wenn zu einem der mobilen Teilnehmerendgeräte eine Rufverbindung aufgebaut werden soll (sogenannter "mobile terminated call"). Dazu werden herkömmlicherweise Signalisierungsdaten übertragen. Erfindungsgemäß werden nun außerdem auch zumindest zeitweise Nutzdaten auf dem Signalisierungskanal PCH übertragen.

In dem in Figur 1 dargestellten Beispiel empfangen die mobilen Teilnehmerendgeräte MX und MY dasselbe Rundspruchsignal von der Basisstation BS1. Außerdem empfängt das mobile Teilnehmerendgerät MX, das sich auch im Funkfeldbereich der anderen Basisstation BS2 befindet, ein Rundspruchsignal von dieser Basisstation BS2. Das Teilnehmerendgerät MZ wird nicht gerufen, so daß kein an dieses Teilnehmerendgerät gerichtetes Rundspruchsignal ausgesendet wird.

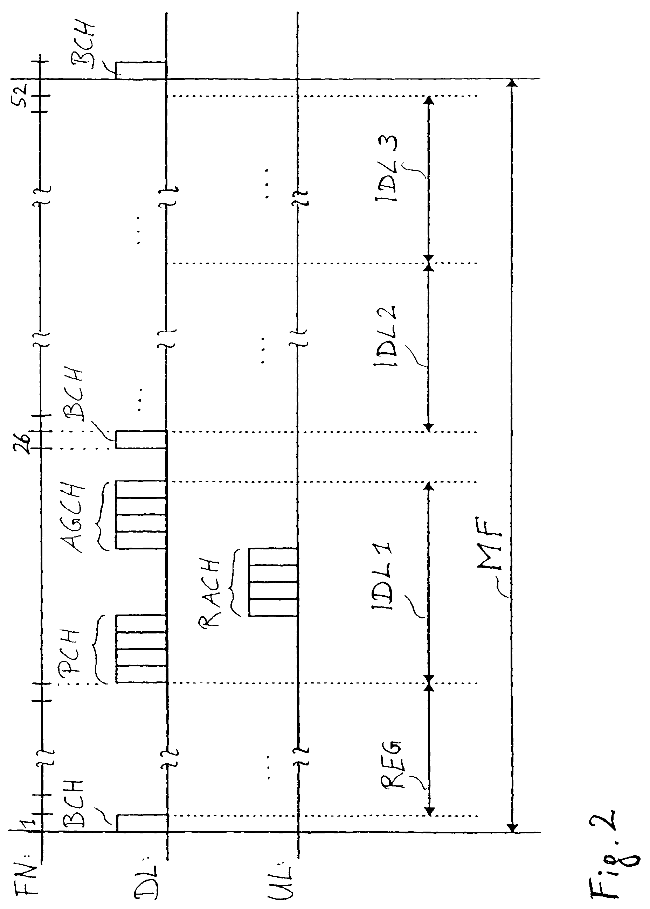

Die Figur 2 zeigt schematisch die Funkübertragung auf dem Signalisierungskanal zwischen der Basisstation BS1 und den Teilnehmerendgeräten MX und MY. Die Funksignale werden nach dem TDMA-Verfahren übertragen, das heißt, innerhalb eines vorgegebenen Zeitrasters, das in diesem Fall ein aus 52 TDMA-Rahmen bestehender Multirahmen MF ist. Der Multirahmen MF umfaßt mehrere Zeitintervalle, hier drei Zeitintervalle IDL1 bis IDL3, die für die Durchführung von Suchrufprozeduren reserviert sind. Außerdem umfaßt der Multirahmen MF ein erstes Zeitintervall REG, das für die Durchführung von einer Registrierungsprozedur reserviert ist. Die Aufteilung des Multirahmens MF ist durch Angabe der Rahmennummer FN angegeben, die in diesem Falle zwischen 1 und 52 liegt.

Die Basisstation sendet auf dem Abwärtskanal DL innerhalb von noch zu beschreibenden logischen Kanälen PCH und AGCH. Die Teilnehmerendgeräte senden auf dem Aufwärtskanal UL innerhalb eines anderen noch zu beschreibenden logischen Kanals RACH. Für die Übertragung auf dem Abwärtskanal DL wird eine erste Funkfrequenz benutzt und für die Übertragung auf dem Aufwärtskanal eine zweite Funkfrequenz. Der Duplexabstand zwischen beiden Funkfrequenzen beträgt hier beispielsweise 45 MHz.

Zu Beginn des Multirahmens MF im Zeitrahmen mit der Nummer FN = 1 sendet die Basisstation auf dem Rundspruchkanal BCH ein Rundspruchsignal, das Informationen für alle sich in der Funkzelle befindenden Teilnehmerendgeräte enthält. Solche Informationen sind beispielsweise die Kennung der Basisstation und Synchronisationsdaten zum Aufsynchronisieren der Teilnehmerendgeräte auf das Zeitnormal der Basisstation. Mit dem Aussenden des Rundspruchssignales im Zeitrahmen FN = 1 beginnt das Zeitintervall REG, also die Registrierungsphase, in der sich Teilnehmerendgeräte an der Basisstation anmelden können. An das Zeitinterval REG für die Registrierung schließen sich mehrere Zeitintervalle für die Durchführung von Suchrufprozeduren an. Diesem Beispielen sind dafür drei Zeitintervalle IDL1 bis IDL3 vorgesehen. Demnach können drei verschiedene Teilnehmerendgeräte oder drei verschiedene Suchrufgruppen angesprochen werden. Beispielhaft für diese Zeitintervalle IDL1 bis IDL3 wird die Funkübertragung in dem Zeitinterval IDL1 näher beschrieben:

Zunächst sendet die Basisstation auf dem Abwärtskanal DL vier hintereinander folgende Suchrufbursts auf dem Suchrufkanal PCH. Diese Suchrufbursts enthalten sowohl Signalisierungsdaten als auch Nutzdaten, mittels denen bestimmte Teilnehmerendgeräte angesprochen werden, entweder einzeln oder als Suchrufgruppe. In diesem Beispiel werden die Teilnehmerendgeräte MX und MY gemeinsam als Suchrufgruppe angesprochen. Nach dem Empfang der Suchrufbursts antworten die angesprochenen Teilnehmerendgeräte auf dem Aufwärtskanal UL, indem sie vier hintereinander folgende Zugriffsbursts RA auf dem Zugriffskanal RACH an die Basisstation zurücksenden. Anschließend bestätigt die Basisstation den Empfang durch Senden von vier Zugangsfreigabebursts auf dem Zugangsfreigabekanal AGCH. Damit ist das Zeitinterval IDL1 abgeschlossen und der Suchruf an sich beendet. Es können dann in den nachfolgenden Zeitintervallen IDL2 und IDL3 weitere Teilnehmerendgeräte mittels anderer Suchsignale angesprochen werden.

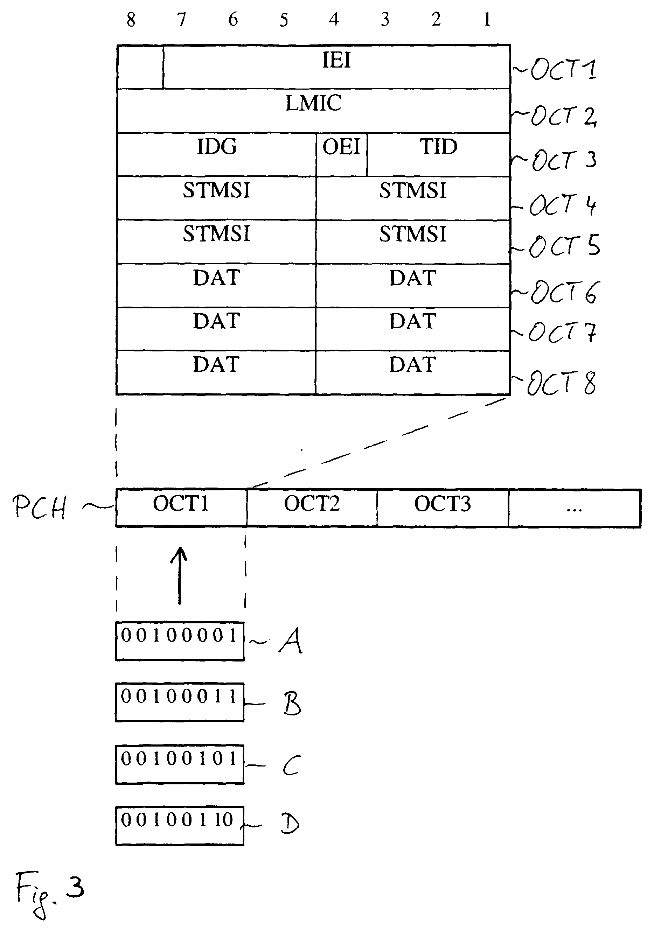

In Figur 3 ist die Struktur der auf dem Signalisierungskanal PCH übertragenen Daten schematisch dargestellt. Die Daten sind 8-bit-wertige Signalisierungsdaten und Nutzdaten, die in Form der zuvor genannten Suchrufbursts übertragen werden. Es werden insgesamt acht solcher Datenwörter übertragen, das heißt acht Oktette, OCT1 bis OCT8 mit dem folgenden Inhalt: Das erste Oktett OCT1 enthält ein erstes Signalisierungsdatum IEI, das die Kennung des gerufenen Teilnehmerendgerätes angibt. Das zweite Oktet OCT2 enthält ein zweites Signalisierungsdatum LMIC, das die Länge des Inhaltes der Kennung angibt. Das dritte Oktet OCT3 entspricht einem dritten Signalisierungsdatum, das ein Kennungsdigit IDG, einen Prüfbitindikator OEI, und eine Angabe über die Art der Kennung TID enthält. Die Oktette OCT4 und OCT5 enthalten Angaben über die temporäre Kennung der gerufenen Teilnehmerendgeräte. Diese Angaben TMSI entsprechen einer verkürzten Form der an sich aus dem GSM-Standard bekannten TMSI (temporary mobile subscriber identity). Die verkürzte Form wird durch BCD-Kodierung hergestellt.

Neben diesen oben genannten Signalisierungsdaten werden auch Nutzdaten auf dem Suchrufkanal übertragen und zwar in Form der Oktette OCT6 bis OCT8. Diese Nutzdaten DAT enthalten Angaben, die nicht für den Rufaufbau selbst benötigt werden, sondern die rein informativen Charakter haben. Die Nutzdaten DAT werden beim Empfang des Teilnehmerendgerätes ausgewertet und in Form von Text, Bild oder Sprache ausgegeben. In diesem Beispiel werden als Nutzdaten die Teilnehmernummer und der Name des rufenden Teilnehmers angegeben. Diese Nutzdaten werden als Textdaten auf dem Anzeigefeld des Teilnehmerendgerätes ausgegeben. Damit erhält der Teilnehmer bereits beim Rufaufbau umfangreiche Informationen über den rufenden Teilnehmer. Außerdem werden in diesem Beispiel auch Nutzdaten übertragen, die angeben, welchen Telekommunikationsdienst der rufende Teilnehmer wünscht. Demnach kann der gerufene Teilnehmer bereits beim Rufaufbau erkennen, ob der rufende Teilnehmer etwa einen Faxdienst oder Kurznachrichtendienst wünscht. Die Nutzdaten enthalten auch Kennungen der Teilnehmerendgeräte die gemeinsam eine Suchrufgruppe bilden. In diesem Beispiel werden die Teilnehmerendgeräte MX und MY (siehe Fig. 1) gemeinsam auf dem Suchrufkanal PCH angesprochen.

Die Figur 3 zeigt auch beispeilhaft verschiedene Bit-Muster A, B, C und D des ersten Oktets OTC1. Durch diese verschiedenen Bit-Muster soll angezeigt werden, um welche Art von Suchrufsignal es sich handelt. Das ersten Bit-Muster A zeigt an, daß lediglich Signalisierungsdaten übertragen werden für den Suchruf an sich. Das zweite Bit-Muster B zeigt an, daß Signalisierungsdaten in Form von BCD-kodierten Wörtern übertragen werden. Das dritte Bit-Muster C zeigt an, daß auch Nutzdaten für einen bestimmten Telekommunikationsdienst übertragen werden, etwa für den Kurznachrichtendienst. Das vierte Bit-Muster D zeigt an, daß das Teilnehmerendgerät im sogenannten "idle mode" verharren soll und auf den Empfang von in einem nachfolgenden Multirahmen gesendeten Nutzdaten warten soll.

Die Erfindung ist besonders gut einsetzbar zur drahtlosen Telekommunikation im Büro- und Heimbereich, als sogenanntes SOHO-System (SOHO: small office and home office).

## Patentansprüche

1. Drahtloses Telekommunikationssystem (CTS) mit mindestens einer Basisstation (BS1, BS2) und mit mindestens einem mobilen Teilnehmerendgerät (MX, MY), das auf einem Signalisierungskanal (PCH) Signalisierungsdaten (IEI, LMIC) empfängt, die die mindestens eine Basisstation (BS1) aussendet,
**dadurch gekennzeichnet, daß**
die mindestens eine Basisstation (BS1, BS2) auf dem Signalisierungskanal (PCH) zumindest zeitweise Nutzdaten (DAT) zum Empfang durch das mindestens eine mobile Teilnehmerendgerät (MX, MY) aussendet.

2. Drahtloses Telekommunikationssystem (CTS) nach Anspruch 1,
dadurch gekennzeichnet, daß
die von der mindestens einen Basisstation (BS1, BS2) ausgesendeten Signalisierungsdaten (IEI, LMIC), ob die Nutzdaten (DAT) Text-, Bild- oder Sprachdaten sind.

3. Drahtloses Telekommunikationssystem (CTS) nach Anspruch 1,
dadurch gekennzeichnet, daß
die Basisstation (BS1) die Signalisierungsdaten (IEI, LMIC) und die Nutzdaten (DAT) als Suchrufsignal auf einer Frequenz aussendet, die das mindestens eine mobile Teilnehmerendgerät (MX, MY) überwacht.

4. Drahtloses Telekommunikationssystem (CTS) nach Anspruch 1,
dadurch gekennzeichnet, daß
die von der Basisstation (BS1) in dem Suchrufsignal ausgesendeten Signalisierungsdaten (IEI, LIMC) und/oder Nutzdaten (DAT) eine Kennung für das mindestens eine Teilnehmerendgerät (MX, MY) enthalten, und daß die Basisstation (BS1) dieses eine Suchrufsignal zumindest an zwei der Teilnehmerendgeräte (MX, MY) sendet, wodurch diese Teilnehmerendgeräte (MX, MY) eine Suchrufgruppe bilden.

5. Drahtloses Telekommunikationssystem (CTS) nach Anspruch 4,
dadurch gekennzeichnet, daß
die Basisstation (BS1) innerhalb eines vorgegebenen Zeitrahmens (MF), der mehrere Zeitintervalle (IDL1, IDL2, IDL3) umfaßt, in diesen Zeitintervallen (IDL1, IDL2, IDL3) Rufsignale an verschiedene Suchrufgruppen sendet.

6. Drahtloses Telekommunikationssystem (CTS) nach Anspruch 4,
dadurch gekennzeichnet, daß
die von der Basisstation (BS1) gesendeten Nutzdaten (DAT) Informationen über die zu der Suchgruppe gehörenden Teilnehmerendgeräte (MX, MY), insbesondere deren Kennung und/oder die Namen der entsprechenden Teilnehmer, enthalten.

7. Drahtloses Telekommunikationssystem (CTS) nach Anspruch 1,
dadurch gekennzeichnet, daß
die Basisstation (BS1) die Signalisierungsdaten (IEI, LMIC) und die Nutzdaten (DAT) zum Aufbau einer Rufverbindung von einem rufenden Teilnehmer zu einem der Telekommunikationsendgeräte (MX) sendet, und daß die Nutzdaten (DAT) die Teilnehmernummer des rufenden Teilnehmers angeben und/oder den von dem rufenden Teilnehmer gewünschten Telekommunikationsdienst angeben.

8. Drahtloses Telekommunikationssystem (CTS) nach Anspruch 7,
dadurch gekennzeichnet, daß
die Nutzdaten (DAT) alphanumerische Daten sind, die das Teilnehmerendgerät (MX) empfängt und auf einem Anzeigefeld anzeigt.

9. Basisstation (BS1) für ein drahtloses Telekommunikationssystem (CTS), die an mindestens ein mobiles Teilnehmerendgerät (MX, MY) auf einem Signalisierungskanal (PCH) Signalisierungsdaten (IEI, LMIC) aussendet,
**dadurch gekennzeichnet, daß**
die Basisstation (BS1) auf dem Signalisierungskanal (PCH) zumindest zeitweise Nutzdaten (DAT) zum Empfang durch das mindestens eine mobile Teilnehmerendgerät (MX, MY) aussendet.

10. Mobiles Teilnehmerendgerät (MX) für ein drahtloses Telekommunikationssystem mit mindestens einer Basisstation (BS1, BS2), das auf einem Signalisierungskanal (PCH) Signalisierungsdaten (IEI, LMIC) empfängt, die die mindestens eine Basisstation (BS1) aussendet,
**dadurch gekennzeichnet, daß**
das das Teilnehmerendgerät (MX) auf dem Signalisierungskanal (PCH) Nutzdaten (DAT) empfängt, die die mindestens eine Basisstation (BS1, BS2) zumindest zeitweise aussendet.
